# EUROPÄISCHE PATENTANMELDUNG

(11) **EP 4 524 535 A1**
(43) Veröffentlichungstag der Anmeldung: **19.03.2025**
(21) Anmeldenummer: 24198824.5
(22) Anmeldetag: 06.09.2024
(51) Int. Cl.: G01L 3/24, B62J 45/411, B62J 45/421, B62M 6/50, G01L 25/00

(54) **VERFAHREN, SYSTEM UND FAHRZEUG ZUR NULLPUNKTKORREKTUR EINES DREHMOMENTSENSORS EINER KURBEL DES FAHRZEUGS**

(30) Priorität: 15.09.2023 DE 102023209005
(71) Anmelder: ZF Friedrichshafen AG, 88046 Friedrichshafen (DE)
(72) Erfinder: Griesmeier, Uwe, 88677 Markdorf (DE)
(74) Vertreter: ZF Friedrichshafen AG

(57) **Zusammenfassung**

Es wird ein Verfahren zur Nullpunktkorrektur eines Drehmomentsensors (4) einer Kurbel (10) eines muskelkraftbetriebenen Fahrzeugs (2) beschrieben. Das Verfahren weist ein Prüfen (S1) auf, ob eine Rückwärtsrotation an der Kurbel (10) vorliegt. Ferner weist das Verfahren, wenn eine Rückwärtsrotation der Kurbel (10) vorliegt, ein Bestimmen (S2) eines Drehmoments an der Kurbel (10) während der Rückwärtsrotation auf. Ferner weist das Verfahren ein Bestimmen (S3) eines Offsets des Drehmomentsensors (4) in Abhängigkeit von dem bestimmten Drehmoment und ein Durchführen (S4) der Nullpunktkorrektur mit dem bestimmten Offset auf. Zudem wird ein System zum Ausführen des Verfahrens und ein muskelkraftbetriebenes Fahrzeug (2) mit einem solchen System beschrieben.

## Beschreibung

### Technisches Gebiet

Die vorliegende Erfindung bezieht sich auf ein Verfahren zur Nullpunktkorrektur eines Drehmomentsensors einer Kurbel eines muskelkraftbetriebenen Fahrzeugs. Ferner bezieht sich die vorliegende Erfindung auf ein System zum Ausführen eines solchen Verfahrens und auf ein muskelkraftbetriebenes Fahrzeug mit einem solchen System.

### Stand der Technik

Aus dem Stand der Technik sind Drehmomentsensoren für muskelkraftbetriebene Fahrzeuge wie Fahrräder und Pedelecs bekannt. Ein solcher Drehmomentsensor wird verwendet, um ein Drehmoment eines Fahrers des Fahrzeugs an einer Kurbel zu messen. In Abhängigkeit von diesem gemessenen Drehmoment erfolgt beispielsweise ein Steuern eines Unterstützungsmotors, wie eines Elektromotors des Pedelecs. Für das Steuern ist es notwendig, dass das Drehmoment möglichst exakt bestimmt wird. Bekannte Drehmomentsensoren unterliegen jedoch Alterungsprozessen, Umwelteinflüssen und messen das Drehmoment abhängig davon, welche Last zuvor gemessen worden ist. Oft liegt ein Drift eines Nullpunktes des Drehmomentsensors vor. Dadurch wird das Messergebnis verfälscht. Daher werden solche Drehmomentsensoren vor Beginn der Verwendung kalibriert, also vor Beginn eines Pedalierens durch den Fahrer. Es erfolgt jedoch kein Kalibrieren während der Verwendung. Es ist daher Aufgabe der Erfindung ein Verfahren zum Kalibrieren und zur Nullpunktkorrektur eines Drehmomentsensors bereitzustellen, sodass der Drehmomentsensor auch während der Verwendung des Fahrzeugs und nach Beginn des Pedalierens kalibriert werden kann.

### Darstellung der Erfindung

Die vorliegende Erfindung betrifft in einem ersten Aspekt ein Verfahren zur Nullpunktkorrektur eines Drehmomentsensors einer Kurbel eines muskelkraftbetriebenen Fahrzeugs. Schritte des Verfahrens können durch eine Steuereinrichtung, einen Drehmomentsensor und eine Kurbel durchgeführt werden. Das Verfahren zur Nullpunktkorrektur des Drehmomentsensors kann ein Verfahren zur Kalibrierung des Drehmomentsensors sein. Die Kurbel kann zwei Kurbelarme aufweisen, an deren jeweiligem Ende sich ein Pedal befinden kann, worüber ein Fahrer des Fahrzeugs Muskelkraft aufbringen kann. Der Drehmomentsensor der Kurbel kann in einem Tretlager des Fahrzeugs angeordnet sein. Das muskelkraftbetriebene Fahrzeug kann beispielsweise ein Zweirad oder Dreirad sein. Das muskelkraftbetriebene Fahrzeug kann zusätzlich motorbetrieben sein. Das Fahrzeug kann ein Fahrrad oder ein Pedelec sein. Der Drehmomentsensor kann eingerichtet sein, ein Drehmoment des Fahrers des Fahrzeugs, aufgebracht auf die Kurbelarme, zu messen.

Das Verfahren weist ein Prüfen auf, ob eine Rückwärtsrotation an der Kurbel vorliegt. Eine Rückwärtsrotation der Kurbel kann so definiert sein, dass keine Muskelkraft des Fahrers zum Vortrieb des Fahrzeugs verwendbar ist. Beispielsweise weist das Fahrzeug eine Kette zwischen der Kurbel und einem angetriebenen Rad des Fahrzeugs auf. In einem Kraftpfad von der Kurbel zum angetriebenen Rad kann das Fahrzeug einen Freilauf aufweisen, wobei bei Rückwärtsrotation der Freilauf abheben kann und ferner eingerichtet sein kann, keine Kraftübertragung von der Kurbel zum angetriebenen Rad zuzulassen. Eine Vorwärtsrotation, entgegengesetzt zur Rückwärtsrotation, kann dabei so definiert sein, dass Muskelkraft, aufgebracht auf Kurbelarme der Kurbel, zum Vortrieb des Fahrzeugs verwendet werden kann. Liegt weder Vorwärts- noch Rückwärtsrotation vor, kann die Kurbel im Stillstand befindlich und in neutral sein. Das Prüfen kann mit dem Drehmomentsensor durchgeführt werden.

Wenn eine Rückwärtsrotation der Kurbel vorliegt, wird ein Bestimmen eines Drehmoments an der Kurbel während der Rückwärtsrotation durchgeführt. Das Bestimmen des Drehmoments kann mit dem Drehmomentsensor durchgeführt werden. Beispielsweise kann mit dem Drehmomentsensor ein einzelner Wert des Drehmoments an der Kurbel während der Rückwärtsrotation gemessen und damit bestimmt werden. Dieser Wert kann zu einem bestimmten Zeitpunkt gemessen und bestimmt werden.

Ferner weist das Verfahren ein Bestimmen eines Offsets des Drehmomentsensors in Abhängigkeit von dem bestimmten Drehmoment auf. Dabei kann ein Bestimmen eines Offsets des Nullpunkts des Drehmomentsensors in Abhängigkeit von dem bestimmten Drehmoment durchgeführt werden. Der Nullpunkt des Drehmomentsensors kann dabei den Punkt definieren, bei dem sowohl kein Drehmoment am Drehmomentsensor anliegt und gleichzeitig vom Drehmomentsensor bestimmt wird, dass kein Drehmoment anliegt. Der Offset des Drehmomentsensors bzw. der Offset vom Nullpunkt des Drehmomentsensors kann dabei eine Differenz zwischen einem wirklichen Drehmoment, beispielsweise einem Drehmoment, welches anliegt, und einem gemessenen und bestimmten Drehmoment von dem Drehmomentsensor beschreiben.

Ferner weist das Verfahren ein Durchführen der Nullpunktkorrektur mit dem bestimmten Offset auf. Mit dem bestimmten Offset kann die Nullpunktkorrektur des Drehmomentsensors durchgeführt werden, so dass wirkliches Drehmoment und gemessenes Drehmoment weniger stark voneinander abweichen und im Idealfall identisch sind.

Mit einem solchen Verfahren kann einfach und schnell die Nullpunktkorrektur des Drehmomentsensors durchgeführt werden. Dabei kann sichergestellt werden, dass bei einer aktuellen Situation, beispielsweise einer aktuellen Fahrsituation und bei einem aktuellen Betriebspunkt des Fahrzeugs, kein oder nahezu kein Drehmoment an der Kurbel anliegt. Dies kann aufgrund von einem oder mehreren verbauten Freiläufen der Fall sein. Beispielsweise kann in einem Tretlager und alternativ oder zusätzlich an einer Radnabe ein Freilauf so angeordnet sein, dass dieser Freilauf Kraftübertragung in eine Richtung zwischen angetriebenem Rad und Kurbel unterbricht. Dieser Freilauf kann beispielsweise konstant bei gleicher Kraft öffnen. Somit kann die Kurbel vom angetriebenen Rad kraftmäßig entkoppelt werden, und lediglich ein Schleppmoment von restlichen Antriebskomponenten zwischen dem Freilauf und der Kurbel kann als Drehmoment auf die Kurbel aufgebracht werden. Im Vergleich zu Verfahren, wo eine Nullpunktkorrektur im Stillstand durchgeführt wird, hat das hier vorgestellte Verfahren den Vorteil, dass kein oder quasi kein Drehmoment auf die Kurbel aufgebracht wird, wohingegen im Stillstand Drehmoment aufgrund eines lastenden Fußes auf einem Pedal der Kurbel auf die Kurbel aufgebracht werden kann. Eine Nullpunktkorrektur ist in einem solchen Fall weniger genau. Auch kann das Verfahren dazu führen, dass der Drehmomentsensor sofort und nach Beginn des Fahrens verwendet werden kann, ohne die Notwendigkeit vor Beginn des Fahrens und Pedalierens eine Nullpunktkorrektur im Stillstand durchführen zu müssen. Die Nullpunktkorrektur kann während der Fahrt, beispielsweise bei Rückwärtsrotation der Kurbel zwischen Phasen, in denen eine Vorwärtsrotation vorliegt, durchgeführt werden. Auch kann die Nullpunktkorrektur zu unterschiedlichen Zeitpunkten und öfters während des Betriebs und des Pedalierens durchgeführt werden. Dabei kann dies während des Betriebs und ohne die Notwendigkeit zum Stillstand erfolgen. So kann, falls sich der Nullpunkt während des Fahrens ändern sollte, die Nullpunktkorrektur angepasst werden. Verfahren zur Nullpunktkorrektur von Drehmomentsensoren sind wichtig, um eine exakte Steuerung des Fahrrads, beispielsweise eines Motors des Fahrrads, durchführen zu können. So werden beispielsweise Motoren von Pedelecs, wie elektrische Motoren, in Abhängigkeit des Drehmoments an der Kurbel gesteuert. Mittels Nullpunktkorrektur nach diesem Verfahren ist ein exakteres Steuern von solchen Elektromotoren möglich.

Gemäß einer weiteren Ausführungsform kann das Verfahren dadurch gekennzeichnet sein, dass beim Prüfen, ob eine Rückwärtsrotation an der Kurbel vorliegt, ein Bestimmen eines Vorzeichens des Drehmoments an der Kurbel durchgeführt werden kann. Das Bestimmen des Vorzeichens des Drehmoments an der Kurbel kann mit dem Drehmomentsensor durchgeführt werden. Ist das Vorzeichen positiv, kann eine Vorwärtsrotation an der Kurbel vorliegen und ist das Vorzeichen negativ, kann eine Rückwärtsrotation an der Kurbel vorliegen. Immer genau dann, wenn ein negatives Drehmoment bestimmt wird, kann eine Rückwärtsrotation an der Kurbel vorliegen. Wird weder ein positives noch ein negatives Drehmoment bestimmt, kann die Kurbel im Stillstand sein und nicht rotiert werden.

Gemäß einer weiteren Ausführungsform kann das Verfahren dadurch gekennzeichnet sein, dass beim Prüfen, ob eine Rückwärtsrotation an der Kurbel vorliegt, ein Bestimmen eines Vorzeichens der Winkelgeschwindigkeit der Kurbel durchgeführt wird. Hierzu kann ein Signal eines Sensors zur Erfassung eines Winkels oder einer Winkelgeschwindigkeit der Kurbel eingesetzt werden. Der Sensor zur Erfassung eines Winkels oder einer Winkelgeschwindigkeit der Kurbel kann mit dem Drehmomentsensor kombiniert sein. Es kann vorgesehen sein, dass der Drehmomentsensor und der Sensor zur Erfassung eines Winkels oder einer Winkelgeschwindigkeit der Kurbel zu einem Sensor integriert sind. Die Nutzung des Vorzeichens des Drehmomentes zur Erkennung der Rückwärtsdrehung kann unzuverlässig sein, da das Moment beim Rückwärtstreten sehr klein ist und daher eine sichere Detektion erheblich schwerer. Mit der Berücksichtigung des Winkels bzw. der Winkelgeschwindigkeit kann die Detektion somit verbessert werden.

Somit ist auf eine einfache Art und Weise und ohne die Notwendigkeit, den absoluten Wert des Drehmoments mit dem Drehmomentsensor für das Prüfen zu bestimmen, die Möglichkeit gegeben, die Rückwärtsrotation der Kurbel zu prüfen.

Gemäß einer weiteren Ausführungsform kann das Verfahren dadurch gekennzeichnet sein, dass Schritte des Verfahrens zum Bestimmen des Drehmoments und zum Bestimmen des Offsets immer dann durchgeführt werden, wenn das Prüfen ergibt, dass eine Rückwärtsrotation an der Kurbel vorliegt. Alternativ können Schritte des Verfahrens zum Bestimmen des Drehmoments und zum Bestimmen des Offsets nur dann, aber nicht notwendigerweise immer, durchgeführt werden, wenn das Prüfen ergibt, dass eine Rückwärtsrotation an der Kurbel vorliegt. In Situationen, in denen das Prüfen ergibt, dass keine Rückwärtsrotation der Kurbel vorliegt, beispielsweise wenn die Kurbel im Stillstand ist oder weil eine Vorwärtsrotation an der Kurbel vorliegt, erfolgen die Schritte des Bestimmens des Drehmoments und des Bestimmens des Offsets beispielsweise nicht. Beispielsweise kann der Fahrer des Fahrzeugs beginnen zu pedalieren. Nach einer bestimmten Zeit und Vorwärtsrotation der Kurbel über das Pedalieren und einen Vortrieb des Fahrzeugs kann der Fahrer eine Rückwärtsrotation der Kurbel durchführen. Es kann das Prüfen durchgeführt werden, dass eine Rückwärtsrotation an der Kurbel vorliegt und dann können, da eine Rückwärtsrotation zu diesem Zeitpunkt vorliegt, die Schritte des Bestimmens des Drehmoments während der Rückwärtsrotation und des Bestimmens des Offsets durchgeführt werden. Später pedaliert der Fahrer erneut vorwärts und bringt eine Vorwärtsrotation auf die Kurbel auf. Das Prüfen kann ergeben, dass die Rückwärtsrotation an der Kurbel nicht mehr vorliegt und die Schritte des Bestimmens des Drehmoments und des Bestimmens des Offsets können nicht mehr erfolgen. Zu einem wiederum späteren Zeitpunkt kann der Fahrer wiederum eine Rückwärtsrotation auf die Kurbel aufbringen, wobei dann das Prüfen wieder ergibt, dass eine Rückwärtsrotation vorliegt und sodann die Schritte des Bestimmens des Drehmoments und des Bestimmens des Offsets wieder erfolgen können. Bei diesen erneuten Schritten des Bestimmens des Drehmoments und des Bestimmens des Offsets können gleiche oder andere Werte des Drehmoments und alternativ oder zusätzlich des Offsets bestimmt werden.

Mit einem solchen Verfahren ist ein Rücksetzen des Offsets zu jedem Zeitpunkt, wenn eine Rückwärtsrotation an der Kurbel vorliegt, möglich. Das Drehmoment wird beispielsweise jedes Mal dann, wenn eine Rückwärtsrotation an der Kurbel vorliegt, bestimmt und in Abhängigkeit davon wird der Offset bestimmt und die Nullpunktkorrektur mit dem bestimmten Offset wird durchgeführt. Alternativ wird das Bestimmen des Drehmoments und des Offsets nur in manchen Situationen durchgeführt, wenn Rückwärtsrotation vorliegt, beispielsweise nach einer bestimmten Zeitdauer. Somit wird während des Betriebs des Fahrzeugs und beispielsweise immer, wenn eine Rückwärtsrotation an der Kurbel vorliegt, der Offset zurückgesetzt und die Nullpunktkorrektur erneut durchgeführt. Dies kann dazu führen, dass, da sich der Offset über die Zeit und auch während des Betriebs verändern kann, die Nullpunktkorrektur möglichst genau und exakt durchgeführt werden kann, und zwar abhängig von einem aktuell bestimmten Offset.

Gemäß einer weiteren Ausführungsform kann das Verfahren dadurch gekennzeichnet sein, dass ein Starten eines Messvorgangs des Drehmoments zum Bestimmen des Drehmoments durchgeführt werden kann. Dabei kann ein Starten des Messvorgangs des Drehmoments mit dem Drehmomentsensor erfolgen und durchgeführt werden. Ferner kann ein Durchführen mehrerer einzelner Messungen des Drehmoments zum Bestimmen des Drehmoments als Messvorgang durchgeführt werden, beispielsweise mit dem Drehmomentsensor. Die einzelnen Messungen des Drehmoments können zeitlich nacheinander erfolgen. Beispielsweise können 100 Messungen pro Sekunde, z. B. zeitlich konstant beabstandet voneinander, durchgeführt werden. Dabei kann auch ein Rauschen in den Messungen mit aufgenommen werden. Ferner kann ein Beenden des Messvorgangs nach einer bestimmten Zeit durchgeführt werden, beispielsweise nach 3 Sekunden, so dass beispielsweise bei 100 Messungen pro Sekunde 300 Messungen vorliegen. Diese bestimmte Zeit kann vordefiniert sein, beispielsweise hartkodiert und parametrisiert durch einen Entwickler des Verfahrens. Ferner kann ein Bestimmen eines Durchschnitts des Drehmoments in Abhängigkeit von den mehreren einzelnen, beispielsweise allen, Messungen des Drehmoments durchgeführt werden. Zum Bestimmen des Durchschnitts kann ein arithmetisches Mittel der Werte der mehreren einzelnen Messungen des Drehmoments bestimmt werden. Das Bestimmen des Offsets des Drehmoments kann in Abhängigkeit von dem bestimmten Durchschnitt durchgeführt werden. Beispielsweise kann der bestimmte Durchschnitt als Offset verwendet werden.

Mit einem solchen Verfahren kann Rauschen im Signal unterdrückt werden, indem der Durchschnitt von mehreren einzelnen Messungen als Offset des Drehmomentsensors bestimmt werden kann.

Gemäß einer weiteren Ausführungsform kann das Verfahren dadurch gekennzeichnet sein, dass ein Bestimmen einer Varianz von den mehreren einzelnen Messungen des Drehmoments um den bestimmten Durchschnitt durchgeführt werden kann. Die Varianz kann die quadratische Abweichung der Werte der einzelnen Messungen des Drehmoments vom bestimmten Durchschnitt des Drehmoments sein oder zumindest proportional dazu sein. Dabei kann die Varianz aller mehrerer einzelner Messungen des Drehmoments um den bestimmtem Durchschnitt bestimmt werden. Ferner kann das Bestimmen des Offsets des Drehmoments in Abhängigkeit von dem bestimmten Durchschnitt durchgeführt werden, wenn die bestimmte Varianz unterhalb eines bestimmten Schwellwerts ist. Der bestimmte Schwellwert kann durch einen Nutzer bestimmt und parametrisiert werden, beispielsweise durch einen Entwickler des Verfahrens. Das Bestimmen des Offsets des Drehmomentsensors kann genau dann durchgeführt werden, wenn die bestimmte Varianz unterhalb des bestimmten Schwellwerts ist. Wenn die bestimmte Varianz nicht unterhalb des bestimmten Schwellwerts ist, also beispielsweise dem bestimmten Schwellwert entspricht oder darüber ist, kann auf das Bestimmen des Offsets des Drehmomentsensors verzichtet werden. In einem solchen Fall kann beispielsweise der bisherige bestimmte Offset basierend auf einem zuvor bestimmtem Drehmoment während einer Rückwärtsrotation zum Durchführen der Nullpunktkorrektur verwendet werden. Der bisherige bestimmte Offset kann dafür beispielsweise auf einem Speichermedium gespeichert sein.

Somit kann sichergestellt werden, dass nur dann das Bestimmen des Offsets basierend auf dem bestimmten Drehmoment erfolgt, wenn keine allzu große Streuung der mehreren einzelnen Messungen des Drehmoments um den Durchschnitt des Drehmoments vorliegt. Somit kann sichergestellt werden, dass die mehreren einzelnen Messungen des Drehmoments valide sind und zu einem validen Durchschnitt des Drehmoments führen, welcher dann zum Bestimmen des Offsets zum Durchführen der Nullpunktkorrektur verwendet werden kann, um eine valide Nullpunktkorrektur zu erhalten. Liegt die Varianz oberhalb eines bestimmten Schwellwerts, kann darauf verzichtet werden, einen aktuellen Offset zu bestimmen. Es kann auf einen zuvor bestimmten Offset zum Durchführen der Nullpunktkorrektur zurückgegriffen werden, beispielsweise gespeichert auf einem Speichermedium.

Gemäß einer weiteren Ausführungsform kann das Verfahren dadurch gekennzeichnet sein, dass ein Einlesen eines Werts zu mechanischen Reibungsverlusten bei der Rückwärtsrotation an der Kurbel durchgeführt werden kann. Der Wert zu mechanischen Reibungsverlusten kann von einem Speichermedium eingelesen werden, wobei der Wert zu mechanischen Reibungsverlusten parametrisierbar und durch einen Nutzer, wie einen Entwickler des Verfahrens, vorgegeben werden kann. Die mechanischen Reibungsverluste können beispielsweise eine Reibung berücksichtigen, die aufgrund der Rückwärtsrotation der Kurbel am Tretlager auftritt. Das Bestimmen des Offsets kann in Abhängigkeit von dem eingelesenen Wert durchgeführt werden. So kann das Bestimmen des Offsets in Abhängigkeit von dem bestimmten Drehmoment und dem eingelesenen Wert zu mechanischen Reibungsverlusten durchgeführt werden.

Mit einem solchen Verfahren können Reibungsverluste beim Bestimmen des Offsets und damit beim Durchführen der Nullpunktkorrektur mit dem bestimmten Offset berücksichtigt werden. Mechanische Reibungsverluste treten beim Rotieren der Kurbel auf, beispielsweise am Tretlager. Dies wirkt sich auch auf das bestimmte Drehmoment aus. Durch das Berücksichtigen der Reibungsverluste kann das Bestimmen des Offsets noch exakter erfolgen, womit auch die Nullpunktkorrektur noch genauer durchgeführt werden kann. Beispielsweise kann ein Wert zu mechanischen Reibungsverlusten ein bestimmtes Drehmoment sein, welches beispielsweise zum Bestimmen des Offsets verwendet werden kann.

Gemäß einer weiteren Ausführungsform kann das Verfahren dadurch gekennzeichnet sein, dass ein Speichern eines ersten bestimmten Offsets zu einem ersten Zeitpunkt durchgeführt werden kann. Dabei kann zu einem ersten Zeitpunkt ein Prüfen erfolgen, ob eine Rückwärtsrotation an der Kurbel vorliegt und ferner kann ein Bestimmen eines ersten Drehmoments an der Kurbel während der Rückwärtsrotation durchgeführt werden. In Abhängigkeit von dem ersten Drehmoment kann das Bestimmen des ersten Offsets durchgeführt werden. Ferner kann ein Bestimmen eines zweiten Offsets zu einem zweiten Zeitpunkt, welcher später als der erste Zeitpunkt sein kann, in Abhängigkeit von dem gespeicherten ersten bestimmten Offset durchgeführt werden. Das Bestimmen des zweiten Offsets kann dabei nicht nur abhängig von zum zweiten Zeitpunkt bestimmten Drehmoment an der Kurbel, sondern auch in Abhängigkeit vom ersten bestimmten Offset bestimmt werden. Beispielsweise kann definiert sein, dass der zweite bestimmte Offset maximal eine bestimmte relative oder absolute Abweichung vom ersten bestimmten Offset haben darf, beispielsweise 10% oder 10 Nm.

Somit ist ein Abgleich mit einem zeitlich zuvor bestimmten Offset möglich. Somit ist eine Validierung des bestimmten Offsets möglich, so dass auch das Durchführen der Nullpunktkorrektur mit einem validierten bestimmten Offset erfolgen kann. Somit kann beispielsweise sichergestellt werden, dass ein bestimmter Offset sich maximal um eine relative oder absolute maximale Änderung vom zeitlich vorher bestimmten Offset unterscheidet. Es kann vermieden werden, dass aufgrund eines Fehlers beim Bestimmen des Drehmoments ein stark unterschiedlicher Offset bestimmt wird und mit diesem Offset das Durchführen der Nullpunktkorrektur gegebenenfalls falsch erfolgt.

Gemäß einer weiteren Ausführungsform kann das Verfahren dadurch gekennzeichnet sein, dass beim Durchführen der Nullpunktkorrektur mit dem bestimmten Offset ein Subtrahieren des bestimmten Offsets von einem mit dem Drehmomentsensor gemessenen Wert des Durchmoments durchgeführt werden kann. So kann beispielsweise bei einer Vorwärtsrotation der Kurbel der Drehmomentsensor einen Wert des Drehmoments messen, beispielsweise ein Drehmoment, welches der Fahrer über die Pedale auf die Kurbel aufbringt. Zum Durchführen der Nullpunktkorrektur kann sodann der bestimmte Offset von dem gemessenen Wert des Drehmoments subtrahiert werden. Somit kann auf einfache Art und Weise die Nullpunktkorrektur bei Verwenden des Drehmomentsensors durchgeführt werden.

Ein zweiter Aspekt der vorliegenden Erfindung betrifft ein System bestehend aus einer Steuereinrichtung, einem Drehmomentsensor und einer Kurbel. Das System ist eingerichtet, Schritte des Verfahrens einer Ausführungsform des ersten Aspekts der vorliegenden Erfindung auszuführen. Das System kann ferner ein Speichermedium aufweisen. Auf dem Speichermedium kann beispielsweise die bestimmte Zeit gespeichert sein, nach der das Beenden des Messvorgangs durchgeführt werden soll. Alternativ oder zusätzlich kann auf dem Speichermedium der bestimmte Schwellwert gespeichert sein, mit dem die bestimmte Varianz verglichen werden kann. Alternativ oder zusätzlich kann der Wert zu mechanischen Reibungsverlusten auf dem Speichermedium gespeichert sein. Ferner kann das Speichermedium zum Speichern von bestimmten Werten des Offsets verwendet werden. Auf dem Speichermedium gespeicherte Information kann von der Steuereinrichtung, welche Schritte des Verfahrens ausführen kann, eingelesen werden. Der Drehmomentsensor kann zum Prüfen eingerichtet sein, ob eine Rückwärtsrotation an der Kurbel vorliegt. Alternativ oder zusätzlich kann der Drehmomentsensor eingerichtet sein, das Bestimmen des Drehmoments von der Kurbel durchzuführen.

Ein dritter Aspekt der vorliegenden Erfindung betrifft ein muskelkraftbetriebenes Fahrzeug mit einem System nach einer Ausführungsform des zweiten Aspekts der vorliegenden Erfindung. Das Fahrzeug kann ein Fahrrad, wie ein Pedelec sein.

### Kurze Beschreibung der Figuren

- Figur 1: zeigt schematisch Schritte eines Verfahrens zur Nullpunktkorrektur eines Drehmomentsensors einer Kurbel eines muskelkraftbetriebenen Fahrzeugs.
- Figur 2: zeigt schematisch ein System sowie ein muskelkraftbetriebenes Fahrzeug zum Ausführen von Schritten des in Figur 1 gezeigten Verfahrens.

### Detaillierte Beschreibung von Ausführungsformen

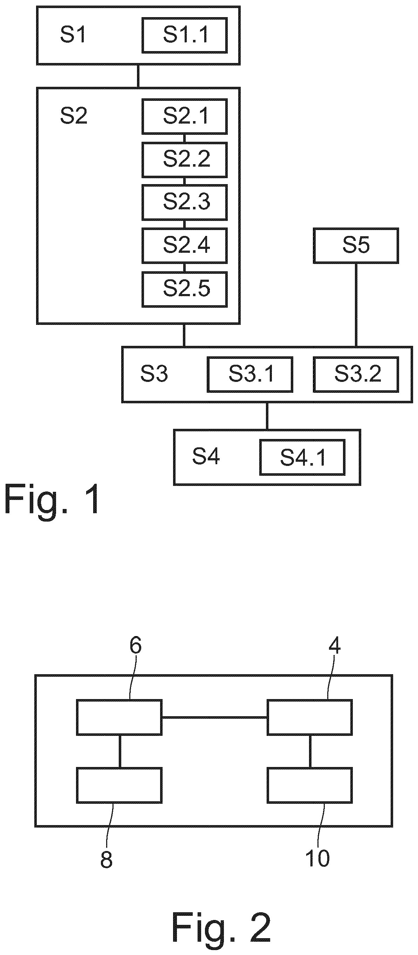

Figur 1 zeigt schematisch Schritte eines Verfahrens zur Nullpunktkorrektur eines Drehmomentsensors 4 einer Kurbel 10 eines muskelkraftbetriebenen Fahrzeugs 2. Figur 2 zeigt das muskelkraftbetriebene Fahrzeug 2 mit einem System zum Ausführen des Verfahrens aus Figur 1. Das System besteht aus einer Steuereinrichtung 6, dem Drehmomentsensor 4 und der Kurbel 10, sowie dem Speichermedium 8. Das muskelkraftbetriebene Fahrzeug 2 ist gemäß der Ausführungsform ein Pedelec mit einem elektrischen Motor zum zusätzlichen Antrieb des Fahrzeugs 2. Die Kurbel 10 weist nicht weiter gezeigte Pedale zum Aufbringen von Muskelkraft eines Fahrer des Fahrzeugs 2 auf.

Der Drehmomentsensor 4 ist eingerichtet, ein Prüfen S1 durchzuführen, ob eine Rückwärtsrotation an der Kurbel 10 vorliegt. Beim Prüfen S1, ob eine Rückwärtsrotation an der Kurbel 10 vorliegt, wird ein Bestimmen S1.1 eines Vorzeichens des Drehmoments an die Kurbel 10 durch den Drehmomentsensor 4 durchgeführt. Bei einer Rückwärtsrotation an der Kurbel 10 wird bestimmt, dass das Drehmoment ein negatives Vorzeichen hat. Die Rückwärtsrotation an der Kurbel 10 erfolgt, wenn der Fahrer die Pedale rückwärts bewegt.

Der Drehmomentsensor 4 ist eingerichtet, wenn eine Rückwärtsrotation der Kurbel vorliegt, ein Bestimmen S2 eines Drehmoments an der Kurbel 10 während der Rückwärtsrotation durchzuführen. Zum Bestimmen S2 des Drehmoments wird ein Starten S2.1 des Messvorgangs des Drehmoments mit dem Drehmomentsensor 4 durchgeführt. Ferner wird ein Durchführen S2.2 mehrere einzelne Messungen des Drehmoments zum Bestimmen S2 des Drehmoments des Messvorgangs durch den Drehmomentsensor 4 durchgeführt. Gemäß der Ausführungsform erfolgen 100 Messungen pro Sekunde. Damit wird 100 mal pro Sekunde das Drehmoment an der Kurbel 10 gemessen. Sodann wird ein Beenden S2.3 des Messvorgangs nach einer bestimmten Zeit durch den Drehmomentsensor 4 durchgeführt. Die bestimmte Zeit beträgt in der Ausführungsform 3 Sekunden, also wird der Messvorgang nach 3 Sekunden beendet und es liegen 300 einzelne Messungen des Drehmoments vor. Die bestimmte Zeit ist dabei hartkodiert und auf dem Speichermedium 8 gespeichert. Ferner werden die gemessenen einzelnen Werte des Drehmoments auf dem Speichermedium 8 gespeichert. Sodann wird ein Bestimmen S2.4 eines Durchschnitts des Drehmoments in Abhängigkeit von den mehreren einzelnen Messungen des Drehmoments durch die Steuereinrichtung 6 durchgeführt. Dafür sind die Steuereinrichtung 6 und das Speichermedium 8 mit dem Drehmomentsensor 4 kommunikativ verbunden. Die Steuereinrichtung 6 liest die mehreren einzelnen Messungen von dem Drehmomentsensor 4 und dem Speichermedium 8 ein.

Es wird ein Bestimmen S3 eines Offsets des Drehmomentsensors 4 in Abhängigkeit von einem bestimmten Drehmoment durch die Steuereinrichtung 6 durchgeführt. Dabei wird das Bestimmen S3 des Offsets des Drehmomentsensors 4 in Abhängigkeit von dem bestimmten Durchschnitt durchgeführt. Als Offset wird der bestimmte Durchschnitt bestimmt.

Zum Bestimmen S2 des Drehmoments wird ein Bestimmen S2.5 einer Varianz von mehreren einzelnen Messungen des Drehmoments um den bestimmten Durchschnitt durch die Steuereinrichtung 6 durchgeführt. Das Bestimmen S3 des Offsets des Drehmomentsensors 4 wird in Abhängigkeit von dem bestimmten Durchschnitt durchgeführt, wenn die bestimmte Varianz unterhalb eines bestimmten Schwellwerts ist. Der bestimmte Schwellwert wird von einem Entwickler des Verfahrens parametrisiert und ist im Speichermedium 8 gespeichert. Wenn die bestimmte Varianz nicht unterhalb des bestimmten Schwellwerts ist, so erfolgt kein Bestimmen S3 des Offsets mit dem bestimmten Durchschnitt des Drehmoments, zu welchem diese Varianz gehört. Stattdessen wird auf einen zeitlich zuvor bestimmten Offset, welcher am Speichermedium 8 gespeichert ist, zurückgegriffen.

Schritte des Verfahrens zum Bestimmen S2 des Drehmoments und zum Bestimmen S3 des Offsets werden immer dann durchgeführt, wenn das Prüfen S1 ergibt, dass eine Rückwärtsrotation an der Kurbel 10 vorliegt. In einer alternativen Ausführungsform werden die Schritte des Verfahrens zum Bestimmen S2 des Drehmoments und zum Bestimmen S3 des Offsets nur dann ausgeführt, wenn das Prüfen S1 ergibt, dass eine Rückwärtsrotation an der Kurbel vorliegt. In dieser alternativen Ausführungsform müssen die Schritte des Verfahrens zum Bestimmen S2 des Drehmoments und zum Bestimmen S3 des Offsets aber nicht immer dann ausgeführt werden, wenn das Prüfen S1 ergibt, dass eine Rückwärtsrotation an der Kurbel 10 vorliegt.

Ferner wird durch die Steuereinrichtung 6 ein Einlesen S5 eines Wertes zu mechanischen Reibungsverlusten bei der Rückwärtsrotation an der Kurbel 10 durchgeführt. Der Wert zu mechanischen Reibungsverlusten ist auf dem Speichermedium 8 gespeichert und beschreibt die Reibungsverluste, die an einem Tretlager des Fahrzeugs 2 bei der Rückwärtsrotation an der Kurbel 10 auftreten. Das Bestimmen S3 des Offsets wird durch die Steuereinrichtung 6 ebenfalls in Abhängigkeit von dem eingelesenen Wert zu den mechanischen Reibungsverlusten durchgeführt. Somit wird der Offset um den Wert der mechanischen Reibungsverluste korrigiert.

Die Steuereinrichtung 6 ist eingerichtet, ein Speichern S3.1 eines ersten bestimmten Offsets zu einem ersten Zeitpunkt durchzuführen. Der erste bestimmte Offset wird in Abhängigkeit von einem ersten bestimmten Drehmoment bestimmt. Das erste bestimmte Drehmoment ist zu einem ersten Zeitpunkt bestimmt und gemessen worden. Ferner wird durch die Steuereinrichtung 6 ein Bestimmen S3.2 eines zweiten Offsets zu einem zweiten Zeitpunkt, welcher später als der erste Zeitpunkt ist, in Abhängigkeit von dem gespeicherten ersten bestimmten Offset durchgeführt. Beim zweiten Zeitpunkt, wenn der Fahrer erneut rückwärts pedaliert und Rückwärtsrotation einer Kurbel 10 vorliegt, wird der zweite Offset in Abhängigkeit von einem zweiten bestimmten Drehmoment bestimmt. Zur Validierung erfolgt das Bestimmen S3.2 des zweiten Offsets auch in Abhängigkeit von dem gespeicherten ersten bestimmten Offset. Dieser, auf dem Speichermedium 8 gespeicherte erste bestimmte Offset, wird verwendet, um ein Validieren des zweiten Offsets durchzuführen. So darf der zweite Offset nur um 10% relativ zum ersten Offset abweichen.

Die Steuereinrichtung 6 ist eingerichtet, ein Durchführen S4 der Nullpunktkorrektur mit dem bestimmten Offset durchzuführen. Dieses Durchführen S4 erfolgt sowohl bei Rückwärtsrotation als auch bei Vorwärtsrotation an der Kurbel 10. Dafür wird der bestimmte Offset nach dem Bestimmen S3 auf dem Speichermedium 8 gespeichert, was in einer Ausführungsform im Schritt des Speicherns S3.1 durchgeführt wird. Zeitlich nach dem Bestimmen S3 des Offsets wird damit das Durchführen S4 der Nullpunktkorrektur mit dem bestimmten und gespeicherten Offset zu beliebigen Zeitpunkten nach dem Bestimmen S3 des Offsets durchgeführt. Dies erfolgt mit dem auf dem Speichermedium 8 gespeicherten Offset. Auch wird, falls die bestimmte Varianz gleich oder oberhalb des bestimmten Schwellwerts ist, kein neuer Offset bestimmt, sondern der auf dem Speichermedium 8 gespeicherte Offset wird weiterhin zum Durchführen S4 der Nullpunktkorrektur verwendet. Beim Durchführen S4 der Nullpunktkorrektur mit dem bestimmten Offset wird durch die Steuereinrichtung 6 ein Subtrahieren S4.1 des bestimmten Offsets von einem mit dem Drehmomentsensor 4 gemessenen Werte des Drehmoments durchgeführt. So misst der Drehmomentsensor 4 bei Vorwärtsrotation an der Kurbel 10 ein bestimmtes Drehmoment. Von diesem wird der bestimmte Offset subtrahiert, um die Nullpunktkorrektur durchzuführen.

### Bezugszeichen

- 2: Fahrzeug
- 4: Drehmomentsensor
- 6: Steuereinrichtung
- 8: Speichermedium
- 10: Kurbel
- S1: Prüfen, ob eine Rückwärtsrotation an der Kurbel vorliegt
- S1.1: Bestimmen eines Vorzeichens des Drehmoments an der Kurbel
- S2: Bestimmen eines Drehmoments an der Kurbel während der Rückwärtsrotation
- S2.1: Starten eines Messvorgangs des Drehmoments
- S2.2: Durchführen mehrerer einzelner Messungen des Drehmoments
- S2.3: Beenden des Messvorgangs nach einer bestimmten Zeit
- S2.4: Bestimmen eines Durchschnitts des Drehmoments
- S2.5: Bestimmen einer Varianz von den mehreren einzelnen Messungen des Drehmoments
- S3: Bestimmen eines Offsets des Drehmomentsensors
- S3.1: Speichern eines ersten bestimmten Offsets
- S3.2: Bestimmen eines zweiten Offsets
- S4: Durchführen der Nullpunktkorrektur
- S4.1: Subtrahieren des bestimmten Offsets von einem gemessenen Wert des Drehmoments
- S5: Einlesen eines Werts zu mechanischen Reibungsverlusten bei der Rückwärtsrotation an der Kurbel

## Patentansprüche

1. Verfahren zur Nullpunktkorrektur eines Drehmomentsensors (4) einer Kurbel (10) eines muskelkraftbetriebenen Fahrzeugs (2) mit den Schritten: Prüfen (S1), ob eine Rückwärtsrotation an der Kurbel (10) vorliegt; wenn eine Rückwärtsrotation der Kurbel (10) vorliegt, Bestimmen (S2) eines Drehmoments an der Kurbel (10) während der Rückwärtsrotation; Bestimmen (S3) eines Offsets des Drehmomentsensors (4) in Abhängigkeit von dem bestimmten Drehmoment; und Durchführen (S4) der Nullpunktkorrektur mit dem bestimmten Offset.

2. Verfahren nach Anspruch 1, **dadurch gekennzeichnet, dass** beim Prüfen (S1), ob eine Rückwärtsrotation an der Kurbel (10) vorliegt, ein Bestimmen (S1.1) eines Vorzeichens des Drehmoments an der Kurbel (10) durchgeführt wird.

3. Verfahren nach Anspruch 1 oder 2, **dadurch gekennzeichnet, dass** beim Prüfen (S1), ob eine Rückwärtsrotation an der Kurbel (10) vorliegt, ein Bestimmen (S1.1) eines Vorzeichens der Winkelgeschwindigkeit der Kurbel (10) durchgeführt wird.

4. Verfahren nach einem der vorhergehenden Ansprüche, **dadurch gekennzeichnet, dass** Schritte des Verfahrens zum Bestimmen (S2) des Drehmoments und zum Bestimmen (S3) des Offsets immer dann durchgeführt werden, wenn das Prüfen (S1) ergibt, dass eine Rückwärtsrotation an der Kurbel (10) vorliegt.

5. Verfahren nach einem der vorhergehenden Ansprüche, **dadurch gekennzeichnet, dass** ein Starten (S2.1) eines Messvorgangs des Drehmoments zum Bestimmen (S2) des Drehmoments durchgeführt wird, dass ein Durchführen (S2.2) mehrerer einzelner Messungen des Drehmoments zum Bestimmen (S2) des Drehmoments als Messvorgang durchgeführt wird, dass ein Beenden (S2.3) des Messvorgangs nach einer bestimmten Zeit durchgeführt wird, dass ein Bestimmen (S2.4) eines Durchschnitts des Drehmoments in Abhängigkeit von den mehreren einzelnen Messungen des Drehmoments durchgeführt wird und dass das Bestimmen (S3) des Offsets des Drehmomentsensors (4) in Abhängigkeit von dem bestimmten Durchschnitt durchgeführt wird.

6. Verfahren nach Anspruch 5, **dadurch gekennzeichnet, dass** ein Bestimmen (S2.5) einer Varianz von den mehreren einzelnen Messungen des Drehmoments um den bestimmten Durchschnitt durchgeführt wird und dass das Bestimmen (S3) des Offsets des Drehmomentsensors (4) in Abhängigkeit von dem bestimmten Durchschnitt durchgeführt wird, wenn die bestimmte Varianz unterhalb eines bestimmten Schwellwerts ist.

7. Verfahren nach einem der vorhergehenden Ansprüche, **dadurch gekennzeichnet, dass** ein Einlesen (S5) eines Wertes zu mechanischen Reibungsverlusten bei der Rückwärtsrotation an der Kurbel (10) durchgeführt wird, und das Bestimmen (S3) des Offsets in Abhängigkeit von dem eingelesenen Wert durchgeführt wird.

8. Verfahren nach einem der vorhergehenden Ansprüche, **dadurch gekennzeichnet, dass** ein Speichern (S3.1) eines ersten bestimmten Offsets zu einem ersten Zeitpunkt durchgeführt wird und dass ein Bestimmen (S3.2) eines zweiten Offsets zu einem zweiten Zeitpunkt, welcher später als der erste Zeitpunkt ist, in Abhängigkeit von dem gespeicherten ersten bestimmten Offset durchgeführt wird.

9. Verfahren nach einem der vorhergehenden Ansprüche, **dadurch gekennzeichnet, dass** beim Durchführen (S4) der Nullpunktkorrektor mit dem bestimmten Offset ein Subtrahieren (S4.1) des bestimmten Offsets von einem mit dem Drehmomentsensor (4) gemessenen Wert des Drehmoments durchgeführt wird.

10. System bestehend aus einer Steuereinrichtung (6), einem Drehmomentsensor (4) und einer Kurbel (10), wobei das System eingerichtet ist, Schritte des Verfahrens der vorhergehenden Ansprüche auszuführen.

11. Muskelkraftbetriebenes Fahrzeug (2) mit einem System nach Anspruch 10.
